# EUROPÄISCHE PATENTSCHRIFT

(11) **EP 4 286 930 B1**
(45) Veröffentlichungstag und Bekanntmachung des Hinweises auf die Patenterteilung: **26.11.2025**
(21) Anmeldenummer: 23170179.8
(22) Anmeldetag: 26.04.2023
(51) Int. Cl.: G02F 1/13357

(54) **ANZEIGEVORRICHTUNG UND FORTBEWEGUNGSMITTEL**
DISPLAY DEVICE AND MEANS OF TRANSPORTATION
DISPOSITIF D'AFFICHAGE ET MOYEN DE LOCOMOTION

(30) Priorität: 01.06.2022 DE 102022205566
(43) Veröffentlichungstag der Anmeldung: 06.12.2023
(73) Patentinhaber: AUMOVIO Germany GmbH, 60488 Frankfurt am Main (DE)
(72) Erfinder: Joseph, Manrico, 60488 Frankfurt am Main (DE); Jekel, Martin, 60488 Frankfurt am Main (DE); Kalender, Sait, 60488 Frankfurt am Main (DE)
(74) Vertreter: Aumovio Corporation

(56) Entgegenhaltungen:
- WO-A1-2021/221905
- DE-A1- 10 245 945
- JP-A- 2001 085 748
- US-A1- 2018 372 300

## Beschreibung

Die vorliegende Erfindung betrifft eine Anzeigevorrichtung sowie ein Fortbewegungsmittel mit einer solchen Anzeigevorrichtung.

Anzahl und Fläche von Anzeigevorrichtungen in Fortbewegungsmitteln steigen ständig an. Anzeigevorrichtungen sind beispielsweise als Kombiinstrument für den Fahrer, als Zentraldisplay und auch als Beifahrerdisplay im Markt anzutreffen. Nicht-selbstleuchtende transmissive Anzeigevorrichtung benötigen zur Bilddarstellung eine Hintergrundbeleuchtung. Die Aufgabe der Hintergrundbeleuchtung ist es dabei, das verwendete Anzeigepaneel so gleichförmig wie möglichst über die gesamte aktive Fläche zu beleuchten, um eine möglichst homogene Anzeige bis in den Randbereich zu erzeugen.

Matrix-Hintergrundbeleuchtungen nutzen eine Vielzahl von in einer Matrix angeordneten Lichtquellen zur Lichterzeugung. Mittels eines Reflektors wird das Licht der Lichtquellen dabei in Richtung des Anzeigepaneels gelenkt.

Beispielsweise beschreibt US 2005/0276069 A1 eine Flüssigkristallanzeige mit einer Diffusionsplatte oder einer Prismenplatte, die zwischen einem Flüssigkristallpanel und einer Vielzahl von Lichtemissionsabschnitten angeordnet ist. Jeder Lichtemissionsabschnitt wird durch einen optischen Leiter und eine oder mehrere lichtemittierende Vorrichtungen gebildet. Der optische Leiter hat eine in einem Substrat ausgebildete Lichtreflexionsfläche und eine Lichtübertragungsfläche, die in engen Kontakt mit der Lichtreflexionsfläche gebracht wird.

DE 10 2007 007 353 A1 beschreibt eine Beleuchtungseinrichtung mit einer Leuchtfläche, die aus einer Vielzahl von Strahlungsreflektoren modulartig zusammensetzbar ist. Vorzugsweise werden wabenförmige, schuppenförmige, dreieckförmige oder rechteckförmige Strahlungsreflektoren verwendet. Jeder der Strahlungsreflektoren weist mehrere strahlungsreflektierende Flächen auf, die, von einem Zentrum ausgehend, in dem eine Lichtquelle angeordnet ist, nach außen gewölbt sind.

Mit zunehmender Größe der Anzeigevorrichtungen nimmt auch die Größe der benötigten Reflektoren immer weiter zu. Dies erschwert die Produktion und Handhabbarkeit der Reflektoren. Zudem wirkt sich die thermische Ausdehnung der Reflektoren im Betrieb negativ auf die optische Performanz aus.

US 2018/0372300 A1 beschreibt eine Licht emittierende Vorrichtung mit einem Lichtquellensubstrat, auf dem eine Vielzahl von Lichtquellen angeordnet ist, und einem Reflexionselement. Das Reflexionselement ist aus mehreren Modulen zusammengesetzt, zwischen denen jeweils ein gewisser Spielraum verbleibt.

DE 102 45 945 A1 beschreibt ein Lichtquellenmodul mit mehreren LEDs, die über eine Isolierschicht mit einem Metallträger verbunden sind. Zum Schutz vor mechanischen Einwirkungen und zur Ausbildung eines Reflektors sind die LEDs von einem Rahmen umgeben, welcher durch Dehnfugen in mehrere Teile segmentiert ist, damit durch Temperaturschwankungen auftretende Spannungen abgefangen werden.

JP 2001-085748 A beschreibt eine lichtemittierende Vorrichtung. Die Vorrichtung weist einen Rahmen auf, in dem Durchgangslöcher ausgebildet sind. In den Durchgangslöchern sind lichtemittierende Halbleiterelemente angeordnet, die mit lichtdurchlässigen Materialien bedeckt sind. Der Rahmen umfasst harte und weiche Bereiche. Die weichen Bereiche sind ausgestaltet, thermische Spannungen auszugleichen.

WO 2021/221905 A1 beschreibt Anzeigevorrichtungen mit unterteilten Komponenten offenbart. Die unterteilten Komponenten können eine oder mehrere unterteilte Lichtplattenbaugruppen, unterteilte Diffusoren und unterteilte strukturierte Lichtleiter umfassen.

Es ist eine Aufgabe der Erfindung, eine verbesserte Anzeigevorrichtung mit einer Matrix-Hintergrundbeleuchtung bereitzustellen.

Diese Aufgabe wird durch eine Anzeigevorrichtung mit den Merkmalen des Anspruchs 1 und durch ein Fortbewegungsmittel gemäß Anspruch 9 gelöst. Bevorzugte Ausgestaltungen der Erfindung sind Gegenstand der abhängigen Ansprüche.

Gemäß einem ersten Aspekt der Erfindung weist eine Anzeigevorrichtung ein Anzeigepaneel und eine Hintergrundbeleuchtung für das Anzeigepaneel auf, wobei die Hintergrundbeleuchtung aufweist:
- einen aus einer Mehrzahl von Modulen bestehenden Reflektor mit einer Vielzahl von reflektierend ausgestalteten Kavitäten, wobei zwischen benachbarten Modulen eine Möglichkeit für eine thermische Ausdehnung der Module vorgesehen ist, und wobei zwischen Reflektorelementen benachbarter Module ein als Reflektorelement ausgestaltetes Ausgleichselement angeordnet ist, das die Reflektorelemente der benachbarten Module komplementiert, und
- eine Vielzahl von jeweils in den Kavitäten angeordneten Lichtquellen.

Bei der erfindungsgemäßen Lösung ist der zwischen den Lichtquellen und dem Anzeigepaneel angeordnete Reflektor modular aufgebaut. Die einzelnen Module weisen dabei jeweils eine Leiterplatte mit darauf angeordneten Lichtquellen sowie ein Reflektorelement auf. Das Reflektorelement besteht vorzugsweise aus Plastik oder einem Elastomer, z.B. aus Polycarbonat mit einer Beimischung von Titandioxid für die gewünschte Reflektivität. Zwischen den benachbarten Modulen sind dabei Maßnahmen umgesetzt, die eine Kompensation einer Wärmeausdehnung im Betrieb ermöglichen. Diese Maßnahmen können darüber hinaus dazu dienen, eventuelle Toleranzen der Module zu kompensieren. Die Verwendung von Modulen hat dabei den Vorteil, dass der Reflektor aus kleineren Elementen zusammengesetzt ist, die einfacher herzustellen und zu handhaben sind. Insbesondere fallen die Toleranzen geringer aus. Auch die erforderlichen Produktionswerkzeuge fallen kleiner aus, sodass die Werkzeuge schneller angefertigt werden können und der Pool von Produzenten, die zur Herstellung in der Lage sind, größer ist. Zudem besteht die Möglichkeit, die Module für unterschiedlich ausgestaltete Anzeigevorrichtungen zu nutzen, was bei einem einstückigen Reflektor regelmäßig nicht möglich ist.

Die reflektierend ausgestalteten Kavitäten orientieren das aus den Lichtquellen austretende Licht in Richtung des Anzeigepaneels, so dass eine homogene Ausleuchtung des Anzeigepaneels erreicht wird. Die Kavitäten können beispielsweise ein Rechteckgitter oder ein Hexagonalgitter bilden. Sowohl die Anordnung der Kavitäten in einem Rechteckgitter als auch die Anordnung der Kavitäten in einem Hexagonalgitter erlaubt es, den Reflektor aus einer lückenlosen Matrix von Kavitäten zu bilden.

Erfindungsgemäß ist zwischen benachbarten Modulen ein Ausgleichselement angeordnet. Das Ausgleichselement besteht dabei nur aus einem Reflektorelement, d.h. es weist weder eine Leiterplatte noch Lichtquellen auf. Das Reflektorelement ist dabei so ausgestaltet, dass es die Reflektorelemente der benachbarten Module komplementiert. Die Verwendung eines Ausgleichselementes verhindert die Ausbildung von nicht ausgeleuchteten Bereichen bei einer temperaturbedingten Verkürzung der Module.

Gemäß einem Aspekt der Erfindung befindet sich zwischen benachbarten Modulen ein Freiraum. Der Freiraum ermöglicht eine Ausdehnung der Module, ohne dass die benachbarten Module aneinanderstoßen und es zu Spannungen und Verformungen kommt. Beispielsweise kann zwischen den Modulen ein Spalt mit einer Breite von ~0,3 mm vorgesehen sein.

Gemäß einem Aspekt der Erfindung befindet sich zwischen benachbarten Modulen ein elastisches Verbindungselement. Ebenso wie ein Freiraum verhindert auch ein elastisches Verbindungselement, z.B. aus Gummi, das Auftreten von Spannungen und daraus resultierende Verformungen der Module. Zugleich verhindert ein solches elastisches Verbindungselement einen eventuellen unerwünschten Lichtdurchtritt.

Gemäß einem Aspekt der Erfindung sind die Reflektorelemente der benachbarten Module so ausgestaltet, dass sie mit dem Ausgleichselement überlappen.

Gemäß einem Aspekt der Erfindung sind die Module mit einem Trägerelement verrastet, verschraubt, verklebt oder vernietet. Für die Befestigung der Module an einem Trägerelement können verschiedene Ansätze genutzt werden. Neben einem Einrasten oder einer Verschraubung ist eine Verklebung mittels flüssigem Kleber oder Klebebändern möglich. Alternativ können die Module vernietet werden, z.B. warmvernietet. Dazu kann der Reflektor bei Bedarf geeignete Niete vorsehen. Welche Art der Befestigung verwendet wird, liegt im Ermessen des Fachmanns. Selbstverständlich können auch mehrere Ansätze kombiniert werden.

Gemäß einem Aspekt der Erfindung weist zumindest eines der Module zumindest ein energieabsorbierendes Stützelement auf. Durch zusätzliche Stützelemente wird ein Brechen des Anzeigepaneels bzw. des Deckglases vermieden. Der Einsatz von Stützelementen ermöglicht es, unterschiedliche Materialien für die Stützelemente und den Reflektor zu verwenden. Beispielsweise können die Stützelemente aus Polycarbonat oder Polymethylmethacrylat gebildet sein.

Gemäß einem Aspekt der Erfindung sind Wände der Kavitäten verrundetet und die Kavitäten sind ausgestaltet, das von den Lichtquellen emittierte Licht in Richtung des Anzeigepaneels zu reflektieren. Durch die Verrundung kann das emittierte Licht gezielter in Richtung des Anzeigepaneels reflektiert werden. Vorzugsweise sind die Lichtquellen dabei seitlich emittierende Leuchtdioden, insbesondere Leuchtdioden, die allseitig Licht emittieren. Die Verwendung von seitlich emittierenden Leuchtdioden hat den Vorteil, dass eine Ausbildung von Lichtspots in der Hintergrundbeleuchtung verhindert wird. Diese sorgt für eine besonders homogen wirkende Beleuchtung des Anzeigepaneels.

Gemäß einem Aspekt der Erfindung liegen die in den Kavitäten eines Moduls angeordneten Lichtquellen in einer Ebene und die Anordnung von Leiterplatten und Modulen ist an eine Krümmung des Anzeigepaneels angepasst.. Die Anordnung der Lichtquellen in einer Ebene erlaubt es, die Lichtquellen auf einer gewöhnlichen ebenen Leiterplatte zu montieren. Um dennoch eine homogene Ausleuchtung eines gekrümmten Anzeigepaneels zu erzielen, sind benachbarte Leiterplatten zueinander verkippt angeordnet. Weiterhin ist der Randbereich eines Moduls entsprechend angepasst.

Vorzugsweise wird eine erfindungsgemäße Anzeigevorrichtung in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

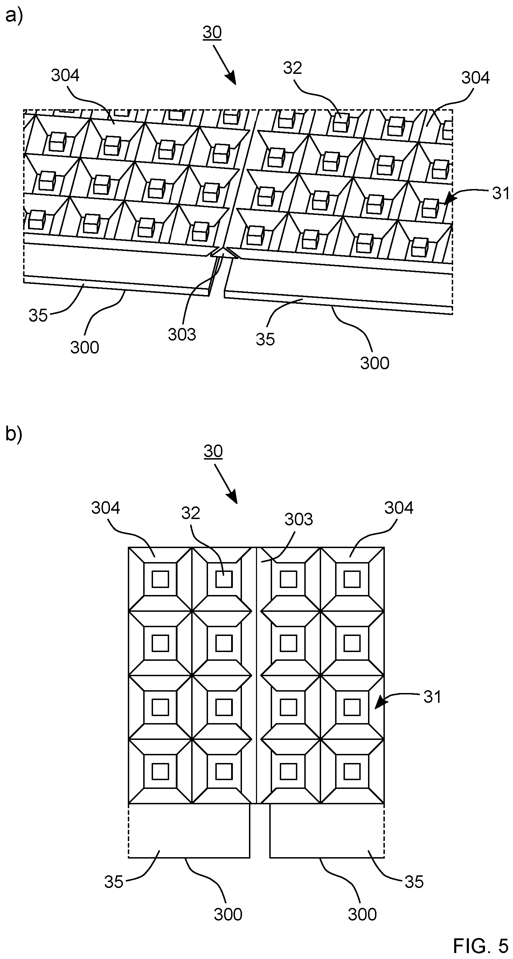

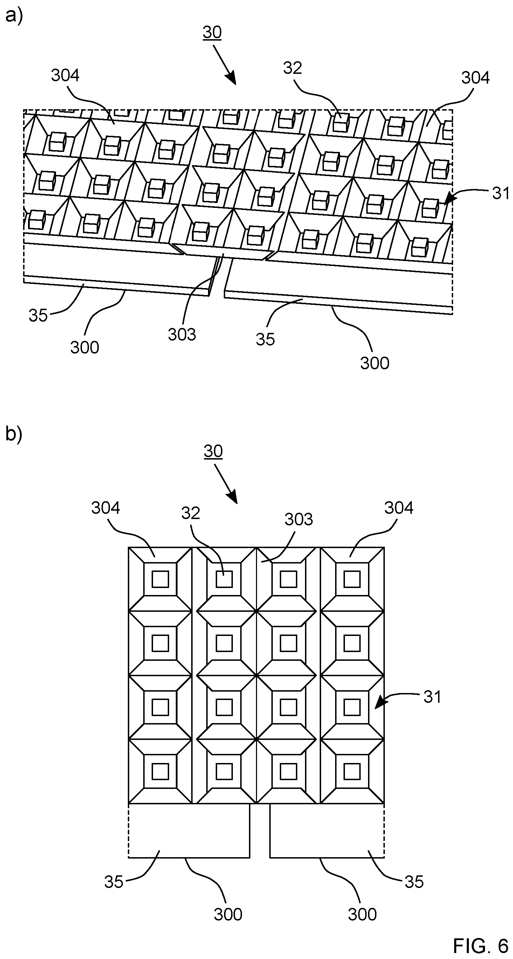

Weitere Merkmale der vorliegenden Erfindung werden aus der nachfolgenden Beschreibung und den angehängten Ansprüchen in Verbindung mit den Figuren ersichtlich. Dabei stellen nur die dritte Ausführungsform (Abbildung 5) und die vierte Ausführungsform (Abbildung 6) Ausführungsformen gemäß der beanspruchten Erfindung dar.

### Figurenübersicht

- Fig. 1: zeigt schematisch einen Ausschnitt einer erfindungsgemäßen Anzeigevorrichtung;
- Fig. 2: zeigt schematisch eine Detailansicht einer erfindungsgemäßen Anzeigevorrichtung;
- Fig. 3: zeigt schematisch eine erste Ausführungsform eines modularen Reflektors;
- Fig. 4: zeigt schematisch eine zweite Ausführungsform eines modularen Reflektors;
- Fig. 5: zeigt schematisch eine dritte Ausführungsform eines modularen Reflektors;
- Fig. 6: zeigt schematisch eine vierte Ausführungsform eines modularen Reflektors;
- Fig. 7: zeigt schematisch eine fünfte Ausführungsform eines modularen Reflektors;
- Fig. 8: zeigt schematisch einen modularen Reflektor, der aus vier verschiedenen Modultypen zusammengesetzt ist;
- Fig. 9: zeigt schematisch einen modularen Reflektor, der aus drei verschiedenen Modultypen zusammengesetzt ist;
- Fig. 10: zeigt mögliche Befestigungen der Module an einem Trägerelement;
- Fig. 11: zeigt schematisch ein Fortbewegungsmittel, das eine erfindungsgemäße Anzeigevorrichtung nutzt; und
- Fig. 12: zeigt eine weitere Ausführungsform eines modularen Reflektors.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

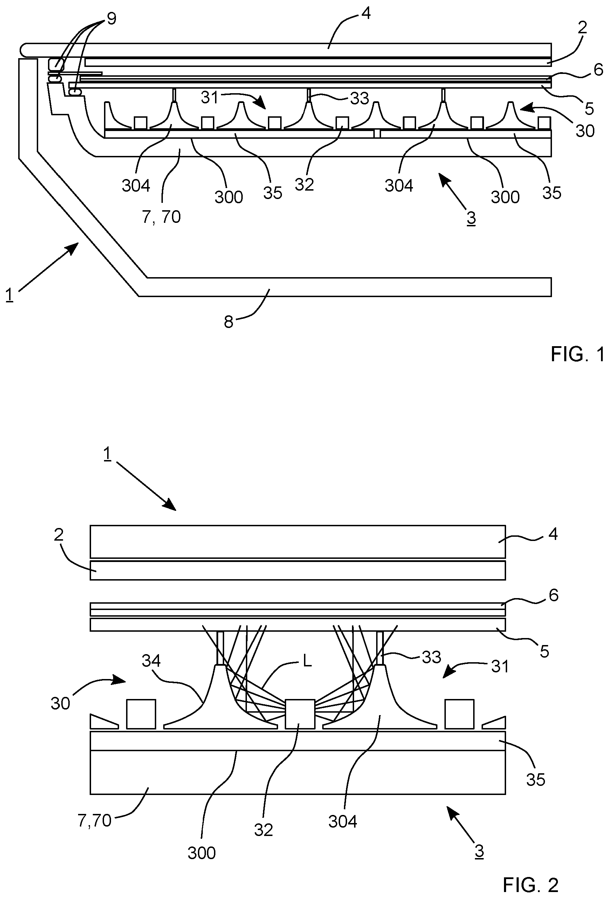

Fig. 1 zeigt schematisch einen Ausschnitt einer erfindungsgemäßen Anzeigevorrichtung 1. Die Anzeigevorrichtung 1 weist ein Anzeigepaneel 2 auf, das mit einem Deckglas 4 verklebt ist. Das Deckglas 4 schließt ein Gehäuse 8 der Anzeigevorrichtung 1 gegenüber der Umgebung ab. In einem weiteren Gehäuse 7 ist eine Hintergrundbeleuchtung 3 für das Anzeigepaneel 2 angeordnet. Das Gehäuse 7 dient als Trägerelement 70 für die Hintergrundbeleuchtung 3. Die Hintergrundbeleuchtung 3 weist einen Reflektor 30 mit einer Vielzahl von Kavitäten 31 auf. In den Kavitäten 31 ist jeweils eine Lichtquelle 32, typischerweise eine Leuchtdiode. Durch optionale zusätzliche Stützelemente 33 wird ein Brechen des Anzeigepaneels 2 bzw. des Deckglases 4 bei einem Kopfaufprall verhindert. Zwischen der Hintergrundbeleuchtung 3 und dem Anzeigepaneel 2 befindet sich im dargestellten Beispiel eine optische Platte 5 mit einem darauf angeordneten Folienstapel 6. Die Folien des optischen Folienstapels 6 haben die Aufgabe, das Licht aus dem Reflektor 30 so zu streuen, zu sammeln oder zu richten, dass die Anforderungen an die Raumwinkel der Hintergrundbeleuchtung 3 erfüllt werden. Typische Folien zur Lichtausrichtung sind Helligkeitsverbesserungsfilme (engl. Brightness Enhancement Film, BEF) und Lichtkontrollfilme (engl. Light Control Film, LCF). Bei der optischen Platte 5 handelt es sich um eine transparente Platte, die den optischen Abstand zwischen dem optischen Folienstapel 6 und den Lichtquellen 32 sicherstellt. Das Deckglas 4, die optische Platte 5 und das Gehäuse 7 der Hintergrundbeleuchtung 3 sind durch geeignete Verbindungselemente 9, z.B. Verklebungen, miteinander verbunden. Der Reflektor 30 besteht aus mehreren Modulen 300, die jeweils eine Leiterplatte 35 mit den darauf angeordneten Lichtquellen 32 sowie ein Reflektorelement 304 aufweisen.

Fig. 2 zeigt schematisch eine Detailansicht einer erfindungsgemäßen Anzeigevorrichtung 1. Zu sehen sind das Deckglas 4 mit dem Anzeigepaneel 2, die optische Platte 5 mit dem Folienstapel 6 und die Hintergrundbeleuchtung 3 mit dem Gehäuse 7, der Leiterplatte 35 mit den darauf angeordneten Lichtquellen 32 und dem Reflektor 30. Bei den Lichtquellen 32 handelt es sich hier um seitlich emittierende Leuchtdioden, die vorzugsweise allseitig Licht L emittieren. Die reflektierend ausgestalteten Wände 34 der Kavitäten 31 des Reflektors 30 sind verrundet ausgestaltet und orientieren das aus den Lichtquellen 32 austretende Licht L in Richtung des Anzeigepaneels 2. Die transparenten Stützelemente 33 lassen das Licht L, abgesehen von einer in Fig. 2 nicht dargestellten Brechung, ungehindert passieren. Geeignete Materialien für die Stützelemente 33 sind z.B. Polycarbonat oder Polymethylmethacrylat. In einer exemplarischen Ausgestaltung liegt die gesamte Aufbauhöhe der Anzeigevorrichtung 1 vorzugsweise im Bereich von ~13,3 mm. Die Höhe des Reflektors 30 kann ~3,72 mm betragen, die Breite der Wände 34 an ihrer breitesten Stelle ~6,13 mm. Der Abstand zwischen dem Folienstapel 6 und dem Anzeigepaneel 2 beträgt ~1,31 mm, der Abstand zwischen dem Reflektor 30 und der optischen Platte 5 liegt bei ~1,05 mm. Der Abstand zwischen den Lichtquellen 32 kann z.B. ~9,13 mm betragen.

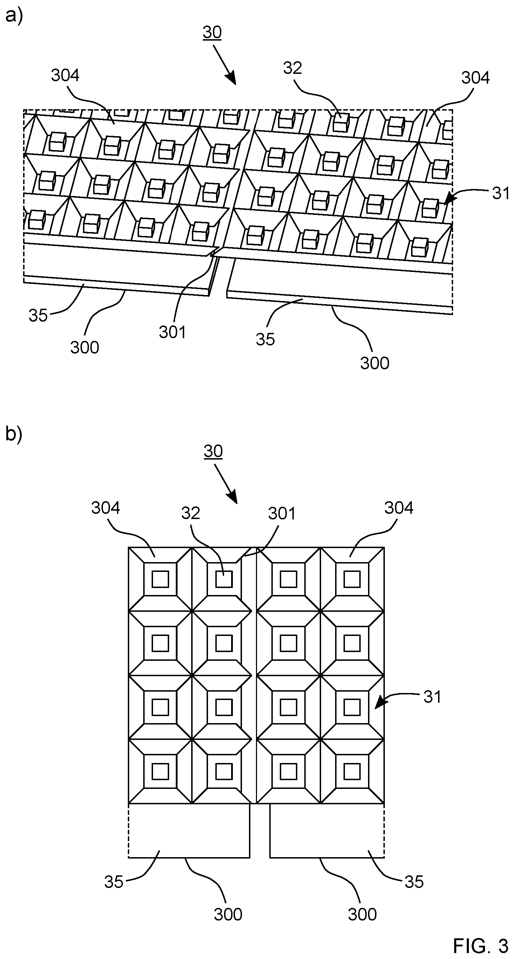

Fig. 3 zeigt schematisch eine erste Ausführungsform eines modularen Reflektors 30. Dabei zeigt Fig. 3a) eine Schrägansicht auf zwei Module 300 des Reflektors 30, Fig. 3b) eine Draufsicht. Jedes der Module weist eine Leiterplatte 35 mit darauf angeordneten Lichtquellen 32 sowie ein Reflektorelement 304 mit Kavitäten 31 auf. Die beiden Module 300. bzw. die Reflektorelemente 304 der Module 300 sind überlappend ausgestaltet, sodass sich die Reflektorelemente 304 komplementieren. Zwischen den Modulen 300 befindet sich ein Freiraum 301. Der Freiraum 301 ermöglicht eine Ausdehnung der Module 300, ohne dass die benachbarten Module 300 bzw. Reflektorelemente 304 aneinanderstoßen und es zu Spannungen und Verformungen kommt. Als Freiraum 301 kann beispielsweise ein Spalt mit einer Breite von ~0,3 mm vorgesehen sein.

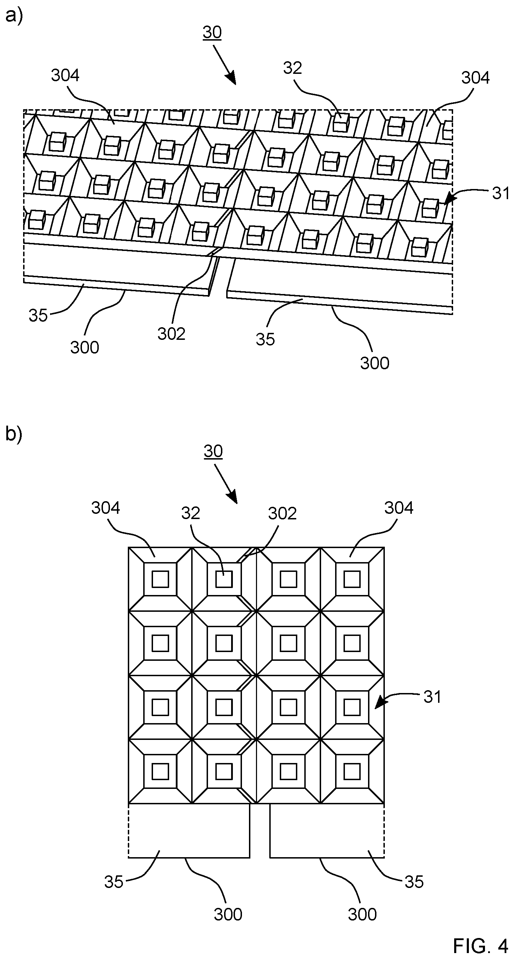

Fig. 4 zeigt schematisch eine zweite Ausführungsform eines modularen Reflektors 30. Dabei zeigt Fig. 4a) eine Schrägansicht auf zwei Module 300 des Reflektors 30, Fig. 4b) eine Draufsicht. Diese Ausführungsform des modularen Reflektors entspricht weitgehend der Ausführungsform aus Fig. 3. Allerdings befindet sich zwischen den Modulen 300 in diesem Fall ein elastisches Verbindungselement 302, z.B. aus Gummi. Auch ein elastisches Verbindungselement 302 ist geeignet, das Auftreten von Spannungen und daraus resultierende Verformungen der Module 300 bzw. Reflektorelemente 304 zu verhindern. Zugleich verhindert ein solches elastisches Verbindungselement 302 einen eventuellen unerwünschten Lichtdurchtritt an den Übergängen zwischen den Reflektorelementen 304.

Fig. 5 zeigt schematisch eine dritte Ausführungsform - gemäß der beanspruchten Erfindung - eines modularen Reflektors 30. Dabei zeigt Fig. 5a) eine Schrägansicht auf zwei Module 300 des Reflektors 30, Fig. 5b) eine Draufsicht. Bei dieser Ausführungsform ist zwischen den Reflektorelementen 304 der benachbarten Module 300 ein Ausgleichselement 303 angeordnet. Das Ausgleichselement 303 besteht im dargestellten Beispiel nur aus einem Reflektorelement 304 in Form einer Wand 34 der Kavitäten 31, d.h. es weist weder eine Leiterplatte noch Lichtquellen auf. Das Reflektorelement 303 ist in Fig. 5 so ausgestaltet, dass es die Reflektorelemente 304 der benachbarten Module 300 komplementiert, d.h. zwischen den Reflektorelementen 304 der benachbarten Module 300 und dem Ausgleichselement 303 besteht eine Überlappung.

Fig. 6 zeigt schematisch eine vierte Ausführungsform - gemäß der beanspruchten Erfindung - eines modularen Reflektors 30. Dabei zeigt Fig. 6a) eine Schrägansicht auf zwei Module 300 des Reflektors 30, Fig. 6b) eine Draufsicht. Diese Ausführungsform des modularen Reflektors entspricht weitgehend der Ausführungsform aus Fig. 5. Allerdings ist das Ausgleichselement 303 breiter ausgeführt, d.h. die Breite entspricht im Wesentlichen der Breite zweier Kavitäten 31.

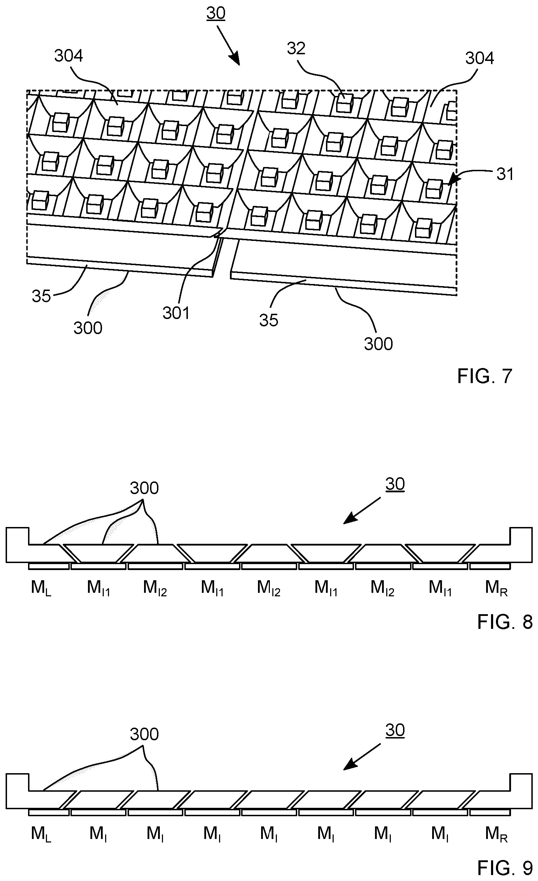

Fig. 7 zeigt schematisch eine fünfte Ausführungsform eines modularen Reflektors 30. Dargestellt ist eine Schrägansicht auf zwei Module 300 des Reflektors 30. Diese Ausführungsform des modularen Reflektors entspricht weitgehend der Ausführungsform aus Fig. 3. Allerdings sind die Wände 34 der Kavitäten 31 verrundetet. Die Überlappung der Reflektorelemente 304 ist an diese Verrundung angepasst.

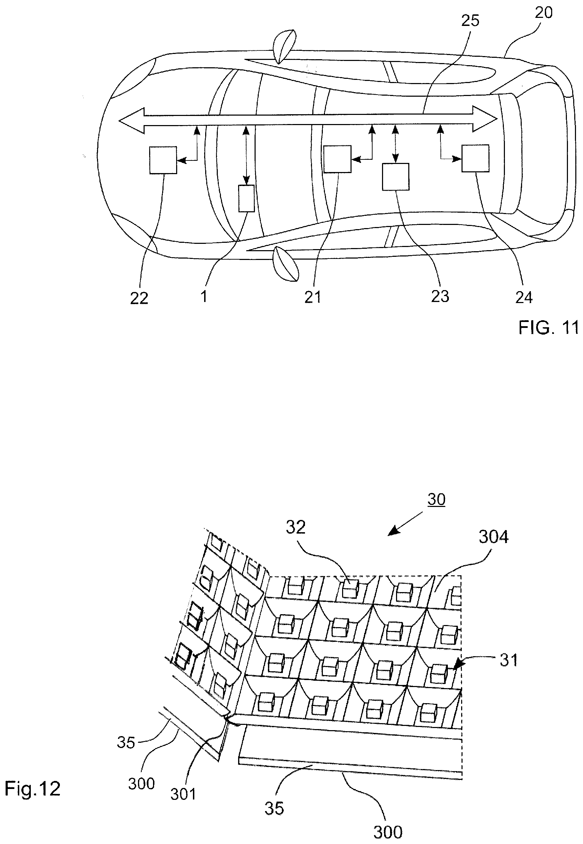

Fig. 12 zeigt eine weitere Ausführungsform eines modularen Reflektors, ähnlich zu Fig.7. Allerdings sind hier die beiden gezeigten Leiterplatten 35 zueinander verkippt angeordnet. Diese Verkippung ist übertrieben stark dargestellt. Die Verkippung dient dazu, eine möglichst gleichmäßige Hinterleuchtung eines hier nicht dargestellten gekrümmte Anzeigepaneels 2 sicherzustellen. Der Randbereich eines Moduls 300 ist dabei so geformt, dass er auch in der verkippten Anordnung eine möglichst vollständige Ergänzung der Reflektorfläche des benachbarten Moduls 300 darstellt.

Fig. 8 zeigt schematisch einen modularen Reflektor 30, der aus vier verschiedenen Modultypen zusammengesetzt ist. Im dargestellten Beispiel besteht der Reflektor 30 aus neun Modulen 300, die vier verschiedene Formen haben und daher mit vier verschiedenen Werkzeugen hergestellt werden müssen:
Linkes Randmodul M_{L}, zwei innere Module M_{I1}, M_{I2}, rechtes Randmodul M_{R}.

Fig. 9 zeigt schematisch einen modularen Reflektor 30, der aus drei verschiedenen Modultypen zusammengesetzt ist. Auch in diesem Beispiel besteht der Reflektor 30 aus neun Modulen 300, die allerdings nur drei verschiedene Formen haben und daher mit drei verschiedenen Werkzeugen hergestellt werden können: Linkes Randmodul M_{L}, inneres Modul M_{I}, rechtes Randmodul M_{R}.

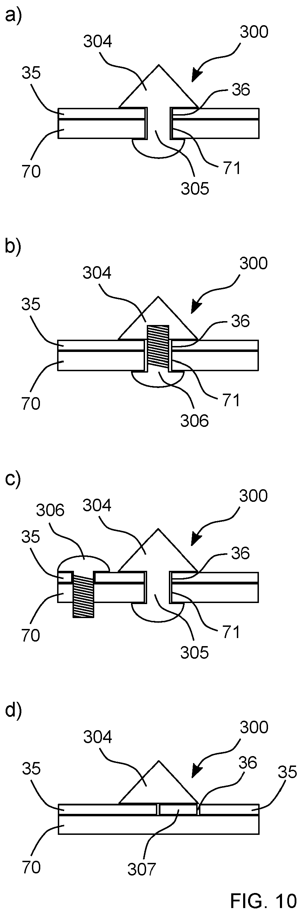

Fig. 10 zeigt mögliche Befestigungen der Module 300 an einem Trägerelement 70. In Fig. 10a) ist das Modul 300 mit dem Trägerelement 70 vernietet. zu diesem Zweck weist das Reflektorelement 304 einen Niet 305 auf, der sich durch eine Aussparung 36 der Leiterplatte 35 und eine Aussparung 71 des Trägerelements 70 erstreckt. Der Niet 305 besteht vorzugsweise aus dem Material des Reflektorelements 304, sodass er auf einfache Weise warmvernietet werden kann. In Fig. 10b) ist das Modul 300 mit dem Trägerelement 70 verschraubt. Zu diesem Zweck ist eine Schraube 306 durch eine Aussparung 71 des Trägerelements 70 und eine Aussparung 36 der Leiterplatte 35 hindurch in das Reflektorelement 304 eingeschraubt. Fig. 10c) zeigt ein Ausführungsbeispiel, bei dem das Reflektorelement 304 mit dem Trägerelement 70 vernietet und die Leiterplatte 35 zusätzliche mit dem Trägerelement 70 verschraubt ist. In Fig. 10d) ist das Modul 300 mit dem Trägerelement 70 verklebt. Zu diesem Zweck dient ein Klebeband 307, das eine Klebeverbindung zwischen dem Reflektorelement 304 und dem Trägerelement 70 herstellt. Das Klebeband 307 ist in einer Aussparung 36 der Leiterplatte 35 angeordnet.

Fig. 11 zeigt schematisch ein Fortbewegungsmittel 20, das eine erfindungsgemäße Anzeigevorrichtung 1 nutzt. Bei dem Fortbewegungsmittel 20 handelt es sich in diesem Beispiel um ein Kraftfahrzeug. Das Kraftfahrzeug weist eine erfindungsgemäße Anzeigevorrichtung 1 auf, die in einer Armaturentafel angeordnet ist. Mit einer Sensorik 21 können Daten zur Fahrzeugumgebung erfasst werden. Die Sensorik 21 kann insbesondere Sensoren zur Umfelderkennung umfassen, z.B. Ultraschallsensoren, Laserscanner, Radarsensoren, Lidarsensoren oder Kameras. Die von der Sensorik 21 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 22, durch das Positionsinformationen bereitgestellt werden können, sowie eine Datenübertragungseinheit 23. Mittels der Datenübertragungseinheit 23 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 24 vorhanden. Der Datenaustausch zwischen den verschiedenen Komponenten des Kraftfahrzeugs erfolgt über ein Netzwerk 25.

### Bezugszeichenliste

- 1: Anzeigevorrichtung
- 2: Anzeigepaneel
- 3: Hintergrundbeleuchtung
- 30: Reflektor
- 300: Modul
- 301: Freiraum
- 302: Elastisches Verbindungselement
- 303: Ausgleichselement
- 304: Reflektorelement
- 305: Niet
- 306: Schraube
- 307: Klebeband
- 31: Kavität
- 32: Lichtquelle
- 33: Stützelement
- 34: Wand
- 35: Leiterplatte
- 36: Aussparung
- 4: Deckglas
- 5: Optische Platte
- 6: Folienstapel
- 7: Gehäuse der Hintergrundbeleuchtung
- 70: Trägerelement
- 71: Aussparung
- 8: Gehäuse der Anzeigevorrichtung
- 9: Verbindungselement
- 20: Fortbewegungsmittel
- 21: Sensorik
- 22: Navigationssystem
- 23: Datenübertragungseinheit
- 24: Speicher
- 25: Netzwerk
- L: Licht
- M_{I} M_{I1}, M_{I2}: Inneres Modul
- M_{L}: Linkes Randmodul
- M_{R}: Rechtes Randmodul

## Patentansprüche

1. Anzeigevorrichtung (1) mit einem Anzeigepaneel (2) und einer Hintergrundbeleuchtung (3) für das Anzeigepaneel (2), wobei die Hintergrundbeleuchtung (3) aufweist:
- einen aus einer Mehrzahl von Modulen (300) bestehenden Reflektor (30) mit einer Vielzahl von reflektierend ausgestalteten Kavitäten (31), wobei zwischen benachbarten Modulen (300) eine Möglichkeit für eine thermische Ausdehnung der Module (300) vorgesehen ist; und
- eine Vielzahl von jeweils in den Kavitäten (31) angeordneten Lichtquellen (32); **dadurch gekennzeichnet, dass** zwischen Reflektorelementen (304) benachbarter Module (300) ein als Reflektorelement ausgestaltetes Ausgleichselement (303) angeordnet ist, das die Reflektorelemente (304) der benachbarten Module (300) komplementiert.

2. Anzeigevorrichtung (1) gemäß Anspruch 1, wobei sich zwischen benachbarten Modulen (300) ein Freiraum (301) befindet.

3. Anzeigevorrichtung (1) gemäß Anspruch 1, wobei sich zwischen benachbarten Modulen (300) ein elastisches Verbindungselement (302) befindet.

4. Anzeigevorrichtung (1) gemäß einem der vorherigen Ansprüche, wobei die Reflektorelemente (304) der benachbarten Module (300) so ausgestaltet sind, dass sie mit dem Ausgleichselement (303) überlappen.

5. Anzeigevorrichtung (1) gemäß einem der vorherigen Ansprüche, wobei die Module (300) mit einem Trägerelement (70) verrastet, verschraubt, verklebt oder vernietet sind.

6. Anzeigevorrichtung (1) gemäß einem der vorherigen Ansprüche, wobei zumindest eines der Module (300) zumindest ein energieabsorbierendes Stützelement (33) aufweist.

7. Anzeigevorrichtung (1) gemäß einem der vorherigen Ansprüche, wobei Wände (34) der Kavitäten (31) verrundetet sind und die Kavitäten (31) ausgestaltet sind, das von den Lichtquellen (32) emittierte Licht (L) in Richtung des Anzeigepaneels (2) zu reflektieren.

8. Anzeigevorrichtung (1) gemäß einem der vorherigen Ansprüche, wobei die in den Kavitäten (31) eines Moduls (300) angeordneten Lichtquellen (32) in einer Ebene liegen und die Anordnung von Leiterplatten (35) und Modulen (300) an eine Krümmung des Anzeigepaneels (2) angepasst ist.

9. Fortbewegungsmittel (20) mit einer Anzeigevorrichtung (1) gemäß einem der vorherigen Ansprüche.

## Claims

1. A display device (1) with a display panel (2) and a backlight (3) for the display panel (2), wherein the backlight (3) has:
- a reflector (30) consisting of a plurality of modules (300) with a plurality of reflectively configured cavities (31), wherein an option for thermal expansion of the modules (300) is provided between adjacent modules (300); and
- a plurality of light sources (32) arranged respectively in the cavities (31); **characterised in that** a compensating element (303) configured as a reflector element is arranged between reflector elements (304) of adjacent modules (300) and complements the reflector elements (304) of the adjacent modules (300).

2. The display device (1) according to claim 1, wherein a free space (301) is located between adjacent modules (300).

3. The display device (1) according to claim 1, wherein an elastic connecting element (302) is located between adjacent modules (300).

4. The display device (1) according to any one of the preceding claims, wherein the reflector elements (304) of the adjacent modules (300) are configured to overlap with the compensation element (303).

5. The display device (1) according to any one of the preceding claims, wherein the modules (300) are latched, screwed, adhesively bonded or riveted to a carrier element (70).

6. The display device (1) according to any one of the preceding claims, wherein at least one of the modules (300) has at least one energy-absorbing support element (33).

7. The display device (1) according to any one of the preceding claims, wherein walls (34) of the cavities (31) are rounded and the cavities (31) are configured to reflect the light (L) emitted by the light sources (32) in the direction of the display panel (2).

8. The display device (1) according to any one of the preceding claims, wherein the light sources (32) arranged in the cavities (31) of a module (300) lie in one plane and the arrangement of printed circuit boards (35) and modules (300) is adapted to a curvature of the display panel (2).

9. A means of transportation (20) having a display device (1) according to any one of the preceding claims.

## Revendications

1. Dispositif d'affichage (1) comprenant un panneau d'affichage (2) et un rétroéclairage (3) pour le panneau d'affichage (2), dans lequel le rétroéclairage (3) présente :
- un réflecteur (30) constitué d'une pluralité de modules (300) avec une pluralité de cavités conçues de manière réfléchissante (31), dans lequel une possibilité de dilatation thermique des modules (300) est prévue entre les modules adjacents (300) ; et
- une pluralité de sources lumineuses (32) disposées chacune dans les cavités (31) ; **caractérisé en ce qu'**un élément de compensation (303) conçu comme élément réflecteur est disposé entre les éléments réflecteurs (304) de modules adjacents (300), lequel élément de compensation complète les éléments réflecteurs (304) de modules adjacents (300).

2. Dispositif d'affichage (1) selon la revendication 1, dans lequel un espace libre (301) se trouve entre des modules adjacents (300).

3. Dispositif d'affichage (1) selon la revendication 1, dans lequel un élément de liaison élastique (302) se trouve entre des modules adjacents (300).

4. Dispositif d'affichage (1) selon l'une des revendications précédentes, dans lequel les éléments réflecteurs (304) des modules adjacents (300) sont conçus de sorte qu'ils chevauchent l'élément de compensation (303).

5. Dispositif d'affichage (1) selon l'une des revendications précédentes, dans lequel les modules (300) sont encliquetés, vissés, collés ou rivetés avec un élément de support (70).

6. Dispositif d'affichage (1) selon l'une des revendications précédentes, dans lequel au moins l'un des modules (300) présente au moins un élément de support absorbant l'énergie (33).

7. Dispositif d'affichage (1) selon l'une des revendications précédentes, dans lequel les parois (34) des cavités (31) sont arrondies et les cavités (31) sont conçues pour réfléchir la lumière (L) émise par les sources lumineuses (32) en direction du panneau d'affichage (2).

8. Dispositif d'affichage (1) selon l'une des revendications précédentes, dans lequel les sources lumineuses (32) disposées dans les cavités (31) d'un module (300) se trouvent dans un plan et l'agencement des cartes de circuit imprimé (35) et des modules (300) est adapté à une courbure du panneau d'affichage (2).

9. Moyen de transport (20) avec un dispositif d'affichage (1) selon l'une des revendications précédentes.
